# EUROPEAN PATENT SPECIFICATION

(11) **EP 1 552 647 B1**
(45) Date of publication and mention of the grant of the patent: **06.12.2017**
(21) Application number: 03788709.8
(22) Date of filing: 14.10.2003
(51) Int. Cl.: H04L 29/08, H04L 12/14, H04M 15/00

(54) **SYSTEM AND METHOD FOR PROCESSING INFORMATION IN A DATA FLOW**
INFORMATIONSVERARBEITUNGSVERFAHREN UND -SYSTEM IN EINEM DATENFLUSS
SYSTÈME ET PROCÉDÉ POUR LE TRAITEMENT D'INFORMATION DANS UN FLUX DE DONNÉES

(30) Priority: 14.10.2002 US 270850
(43) Date of publication of application: 13.07.2005
(73) Proprietor: Cisco Technology, Inc., San Jose, CA 95134-1706 (US)
(72) Inventor: ALBERT, Mark, Morrisville, NCA 27560 (US); GRAY, Richard, L., Cary, NCA 27513 (US); MENDITTO, Louis, F., Raleigh, NC 27612 (US); SUTTON, Michael, S., Garner, NCA 27529 (US); TSANG, Tzu-Ming, Chapel Hill, NCA 27516 (US)
(74) Representative: Roberts, Gwilym Vaughan
(86) International application number: PCT/US2003/032923
(87) International publication number: WO 2004/036826

(56) References cited:
- EP-A- 1 026 853
- WO-A-01/58110
- WO-A-01/91446
- WO-A-02/15554

## Description

### TECHNICAL FIELD OF THE INVENTION

This invention relates in general to the field of data processing and more particularly to a system and method for processing information in a data flow.

### BACKGROUND OF THE INVENTION

Data processing has become increasingly complex in network communication systems. The ability to properly process and route information is important for maintaining system speed and ensuring the accurate delivery of information to an intended destination. One drawback associated with some network communications is that limitations imposed by a single element may inhibit network speed of a corresponding communication architecture. This may be a result of one or more elements within the communication system that are unable to keep pace with the processing needs or the data flows propagating in an associated network. This deficiency may not only hinder communication speeds but may also restrict the number of processing operations that may be performed on a given data flow. Additional processing operations generally require additional time intervals necessary to adequately process the information. Thus, the ability to provide an array of processing operations at optimal speeds is virtually impossible in cases where a single network element is congested or unable to keep up with the processing demands of a given network architecture. This overflow may be a result of a growing subscriber base, a large number of concurrent end users on the network, or a large amount of network traffic propagating through one or more elements within the communication architecture.

WO 01/58110 discloses a system in which a gateway routes signals between a WAP mobile phone and an application on a Web server. The application generates a message for each of a number of events recognised according to the service being provided. These messages are transmitted to the gateway. A billing manager in the gateway directs the messages in real time to a real time mediation device if they relate to a pre-pay service, or alternatively to a billing log for off-line processing. WO 01/91446 discloses a system in which, when an Activate Packet Data Protocol (PDP) Context Request message is forwarded to a Service GPRS Support Node (SGSN), the SGSN creates a Create PDP Context Request message and forwards it to a Gateway GPRS Support Node (GGSN). In response to the Create PDP Context Request forwarded by the SGSN, the GGSN creates a Create PDP Context Response message. When a PDP context is created by the GGSN, the GGSN associates a Globally Unique Charging Identification (GCI) with the PDP context. Then, the Create PDP Context Response including the GCI is forwarded to the SGSN. The GCI is sent from the SGSN to the User Equipment (UE) and from the UE to the Call State Control Function (CSCF).

### SUMMARY OF THE INVENTION

From the foregoing, it may be appreciated by those skilled in the art that a need has arisen for an improved approach for processing information in a data flow. In accordance with one embodiment of the present invention, a system and method for processing information in a data flow are provided that substantially eliminate or greatly reduce disadvantages and problems associated with conventional information processing techniques.

According to one embodiment of the present invention, there is provided a method for processing information in a data flow that includes receiving first and second data flows and extracting first and second portions of information from the first and second data flows respectively. The method further includes communicating a first billing record based on the first portion of information and a second billing record based on the second portion of information. The first portion of information includes data associated with a first end user and the second portion of information includes data associated with a second end user. The first billing record is received at a first billing mediation agent.

The second billing record is received at a second billing mediation agent. The first and second billing records are used to generate first and second results that reflect one or more parameters associated with the first and second end users respectively.

Certain embodiments of the present invention may provide a number of technical advantages. For example, according to one embodiment of the present invention, an approach for processing information in a data flow is provided that offers the ability to distribute work evenly amongst multiple billing mediation agents (BMAs). The BMAs may receive billing records from a client service gateway (CSG) and adequately process the billing records in order to generate a bill or an account for an end user or to be used in information mining operations. Multiple BMAs helps to ensure that the processing needs of a given network are met as data flows increase from an end user subscriber base. This may further allow the CSG to receive a large number of data flows such that multiple BMAs are properly implemented in order to keep pace with the processing needs of the communication system.

Another technical advantage associated with one embodiment of the present invention is a result of the distribution of billing or accounting functionalities to multiple BMAs. The use of multiple BMAs provides a redundancy feature provided to a network architecture. Thus, if a single BMA becomes non-operational or dysfunctional, the system may continue to operate normally as work that would otherwise have been distributed to the failing BMA may now be redistributed amongst the other active or operational BMAs in the communication system. This may further allow for each of the BMAs to be removed, repaired, or otherwise disabled without inhibiting communications that are propagating through the network.

Yet another technical advantage associated with one embodiment of the present invention relates to the ability to correlate an end user's identification and an internet protocol (IP) address. This may be a result of a known user table (KUT) that may store entries that provide this correlation. Thus, an end user may be correlated to an IP address for purposes of billing or accounting. This may further simplify a billing or an accounting process and provide for a suitable generation of billing statements to be provided to an end user based on a number of suitable parameters.

Still another technical advantage associated with one embodiment of the present invention relates to system performance. A given communication system may be simplified significantly because of the reduction in overhead that would otherwise be needed to receive a large volume of billing messages and to process the billing messages in order to determine which billing agent should receive data associated with a given end user. In addition, such overhead may also be required in order to re-send the information to a proper billing agent or alternative billing entity. This simplicity is further illustrated by the communication of multiple billing records that may be bundled into a single billing message or record. The bundling operation may reduce the number of messages that may have to be sent and therefore reduce the processing requirements associated with a given network architecture. Thus, all information or data associated with a given end user may be identified, tracked, and communicated to a specified location. This effectively avoids sending a series of small data segments to a given location using multiple messages. Embodiments of the present invention may enjoy some, all, or none of these advantages. Other technical advantages may be readily apparent to one skilled in the art from the following figures, description, and claims.

### BRIEF DESCRIPTION OF THE DRAWINGS

To provide a more complete understanding of the present invention and features and advantages thereof, reference is made to the following description, taken in conjunction with the accompanying figures, wherein like reference numerals represent like parts, in which:
FIGURE 1 is a simplified block diagram of a communication system for processing information in a data flow;
FIGURE 2 is a simplified block diagram of a known user table (KUT) included within the communication system; and
FIGURE 3 is a flow chart illustrating a series of example steps associated with a method for processing information in a data flow.

### DETAILED DESCRIPTION OF THE INVENTION

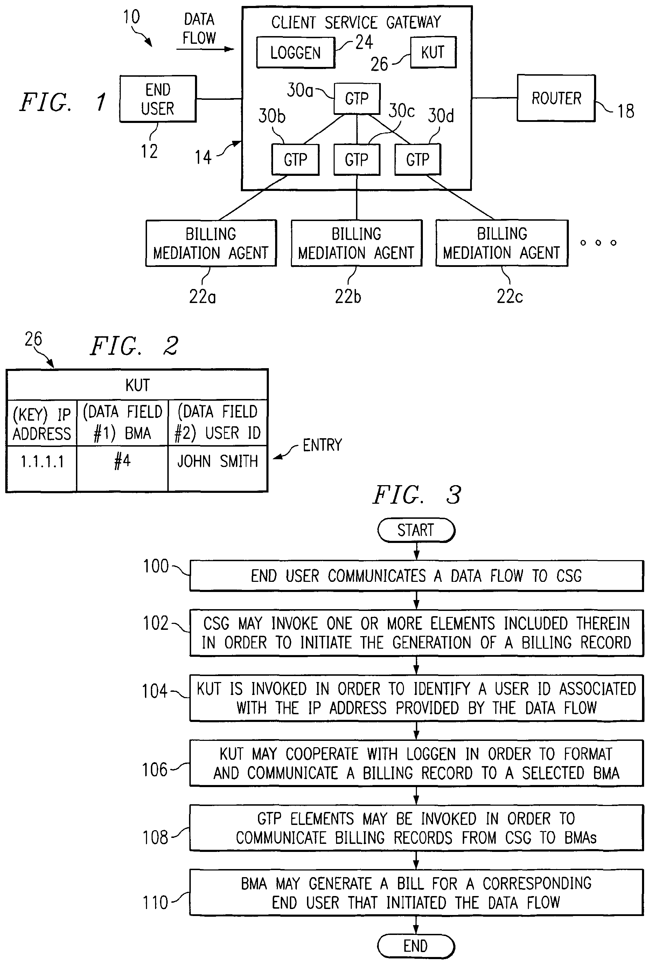

FIGURE 1 is a simplified block diagram of a communication system 10 for processing information included within a data flow. Communication system 10 may include an end user 12, a client service gateway (CSG) 14, a router 18, and multiple billing mediation agents (BMAs) 22a-c. In addition, CSG 14 may include a loggen element 24, a known user table (KUT) element 26, and multiple general packet radio system (GPRS) tunneling protocol (GTP) communications protocol elements 30a-d that facilitate communications between CSG 14 and BMAs 22a-c. Communication system 10 may be positioned in any suitable location within or external to a communications network in order to facilitate the delivery, transmission, or processing of information or data in a communications environment.

In accordance with the teachings of the present invention, communication system 10 operates to distribute processing operations from data flows amongst multiple BMAs 22a-c. Initially, each of BMAs 22a-c may be operational such that a portion of data may be sent to BMA 22a, another portion of data may be sent to BMA 22b, and another data portion may be sent to BMA 22c. This workload distribution allows network elements within an associated architecture that cooperate with BMAs 22a-c to maintain optimal processing speeds. CSG 14 may be positioned in a data flow between end user 12 and router 18. CSG 14 may examine the data flow and extract information (such as an Internet Protocol (IP) address for example) to be used in generating a billing record that is communicated to selected BMAs 22a-c. Thus, multiple BMAs 22a-c may be used to evenly process the workload for operations associated with multiple end users 12. CSG 14 may receive a data flow, extract the requisite information appropriately, and then send the harvested information to selected BMAs 22a-c in the form of billing records. Each of BMAs 22a-c may then use these billing records for any suitable purpose, such as for generating a bill for end user 12 or for data mining exercises for example.

The use of multiple BMAs 22a-c operates to reduce overflow problems associated with processing demands imposed by CSG 14. This is a result of the implementation of multiple BMAs 22a-c that may each receive a portion of information included within incoming data flows. This further allows CSG 14 to receive a large volume of data flows without being inhibited by lethargic processing speeds associated with a single overwhelmed billing entity. The use of multiple BMAs 22a-c may also provide a redundancy feature to an associated network architecture. Accordingly, where a single BMA 22a-c becomes non-operational or dysfunctional, communication system 10 may continue to operate normally as work that would otherwise have been distributed to the failing BMA may now be redistributed amongst the other active or operational BMAs involved in the data processing. This may further allow for each of the BMAs to be removed, repaired, or otherwise disabled without inhibiting communications propagating through the network.

The use of multiple BMAs 22a-c may also provide increased flexibility to communication system 10. This is a result of the various operations that may now be provided to communication system 10 because of the enhanced processing capabilities. The enhanced processing capabilities are the result of BMAs 22a-c that may process information more quickly and keep pace with other elements within the network. Additionally, this configuration further simplifies the generation of billing or accounting records for end user 12.

Communication system 10 may also provide for enhanced network communications as a result of the simplicity in processing data flows. This is a result of the reduction in overhead that would otherwise be needed to receive a large volume of billing messages and to process the billing messages in order to determine which billing agent should receive data associated with end user 12. In addition, such overhead may also be required in order to re-send the information to a proper billing agent or alternative billing entity. This simplicity may be the result of the bundling of multiple billing records into a single billing message or record. This bundling may reduce the number of messages that may have to be sent and therefore reduce the processing requirements associated with a given network architecture. For example, in other systems a load balancer may have to unbundle one ore more billing records within a given message and either send them individually to proper billing entities or rebundle each of them destined for the same billing entity. Either operation may significantly inhibit system performance and add latency to a corresponding network architecture. Such deficiencies may be avoided with the use of multiple BMAs 22a-c. In addition, CSG 14 may cooperate with multiple BMAs 22a-c to effectively manage and direct data flows such that all billing records associated with end user 12 are processed at one designated location with a minimal set of processing operations.

End user 12 is a client or a customer that initiates a communication in communication system 10. End user 12 may be coupled to a suitable network, where appropriate, and inclusive of any device operable to initiate a communication, such as a computer, a personal digital assistant (PDA), a laptop, a mobile station, an electronic notebook, a telephone, or any other device, component, element, or object capable of initiating voice or data exchanges within communication system 10. End user 12 may also be inclusive of a suitable interface to the human user, such as a microphone, a display, a keyboard, or any other terminal equipment (such as, for example, an interface to a personal computer) . End user 12 may also be any device that seeks to initiate a communication on behalf of a another entity or element, such as a program, a database, or any other component, device, element, or object capable of initiating a voice or data exchange in a network environment. Data, as used herein, refers to any type of numeric, voice, graphics, video, or script data, or any other type of source or object code, or any other suitable information in any appropriate format that may be communicated from one point or one node to another.

CSG 14 is a network element inserted into a data flow that may view, extract, identify, or otherwise access information included within the data flow. In an example embodiment, CSG 14 may extract IP source address information associated with end user 12. The IP source address may then be used to determine an identity of end user 12 that may be stored in KUT 26. Alternatively, CSG 14 may extract or identify any information within the data flow that provides a correlation between end user 12 and a given data flow. CSG 14 may also be a client-aware device that provides or offers some service or feature to end user 12. Such services may be based on an effective mapping between a source IP address of a given address packet and a user profile associated with end user 12. CSG 14 may utilize a source IP address in providing services or features to end user 12.

There are a number of additional reasons why a device or a component may seek to identify the source (end user 12) associated with a communication session or data flow. For example, some devices may wish to identify end user 12 for authorization purposes. In another example, a device may wish to maintain user profiles for billing or accounting records (for example, in conjunction with per-user accounting) or to provide for content billing information. Alternatively, a device or a component may use the identification of end user 12 to provide for any other type of suitable client-aware service, tool, or feature according to the particular needs of network components or equipment. Additional services may be related to areas such as routing, permissions or access granting mechanisms, priority, quality of service (QoS), firewalling, content filtering, or any other suitable parameters or policies where user-aware characteristics serve as a basis for the network service implementation.

A suitable algorithm may be included within CSG 14 that allows CSG 14 to control which BMA 22a-c is implemented. This algorithm may be inclusive of load balancing operations, whereby the activity associated with each BMA 22a-c is taken into account before assignment of end user 12 (or a data flow) to a designated BMA 22a-c. In addition, a correlation or 'stickying' operation may be implemented within CSG 14 in order to associate a given end user 12 to a selected BMA 22a-c. The correlation or stickying operation for end user 12 to a given BMA 22a-c may be implemented using a table (such as KUT 26) that stores which end user 12 was previously directed to a selected BMA 22a-c. This allows all information related to a particular end user 12 to be directed to the same BMA 22a-c that already maintains some information about the current or a previous data flow or end user 12. This may be particularly useful if a selected BMA 22a-c is maintaining a cache for a given end user 12 or processing that particular information for some other purpose. Thus, one BMA 22a-c may receive all information associated with a given end user 12 and its associated billing records. In an alternative embodiment, a protocol or algorithm may be implemented within CSG 14 or BMAs 22a-c (or both) that achieves cooperation or sharing of information amongst BMAs 22a-c in cases where information is sprayed to multiple BMAs 22a-c instead of being directed to a single selected BMA 22a-c.

Loggen 24 is a storage element operable to build billing records and communicate the billing records to selected BMAs 22a-c based on information provided by KUT 26. Even in cases where the information returned by KUT 26 reflects a null (e.g., no active BMAs), this may be communicated to GTP element 30a, which may use the value to determine the destination and queue(s) to use or invoke for a corresponding billing record. Loggen 24 may also operate to store data for later use and execute all formatting for billing records to be communicated to selected BMAs 22a-c. Loggen 24 may be implemented using hardware, software, or any other suitable element or object operable to store information and to generate a billing record to be communicated to selected BMAs 22a-c.

In operation, loggen 24 may communicate with KUT 26 to assign a selected BMA 22a-c, whereby a sticky timer may be started for the element with a BMA handle that is returned. When the sticky timer expires, if there has been any activity for the element the sticky timer may be restarted. Activity may be defined as any request for a selected BMA 22a-c contained within the element. In other cases, the sticky timer may be removed entirely from communication system 10.

KUT 26 is a data storage element that manages one or more correlations between the ID of end user 12 and a corresponding IP address. KUT 26 may also store information relating to which BMA 22a-c has been previously designated to end user 12 and be invoked when additional information associated with end user 12 is communicated to CSG 14. KUT 26 may be consulted as additional billing records are created in order to determine which BMAs 22a-c should receive selected billing records. KUT 26 may also include an application program interface (API) that may be implemented in order to obtain user ID information for an IP address from a data flow.

In operation, KUT 26 may return a selected BMA 22a-c to use as the destination for all billing records for a particular session, data flow, or end user 12 in accordance with one or more of the following example guidelines. If an element with an already known user ID exists in KUT 26 and corresponds to any requested IP address, the identification (IP address) of the selected BMA 22a-c may be forwarded from KUT 26 to the caller entity or end user 12. Where requested elements with user IDs exist, the selected BMA 22a-c for a first IP request may be returned. Elements that resolve two user IDs may receive a BMA assigned to them individually.

If no IP address has a corresponding element in KUT 26, KUT 26 may notify loggen 24 that no user ID is present in the table, i.e. no BMA 22a-c is assigned. When loggen 24 determines that no user ID information will be obtained, it may communicate with KUT 26 and deliver source and destination IP addresses in order to assign a selected BMA 22a-c. KUT 26 may retrieve both elements and retrieve a BMA assignment from either request, whereby preference may be given to the source IP address. If neither element has a BMA assigned to it, the source address element may be assigned to a selected BMA 22a-c.

KUT 26 may also operate to accurately recall the IP address associated with an identification correlating to end user 12. KUT 26 may maintain the assignments of BMAs 22a-c to given end users 12. In an example scenario, CSG 14 may not know the identity of end user 12 and therefore an IP source address or some other user-identifying data is needed. The IP address may be dynamically assigned when an associated device is activated, e.g., a cellular telephone is turned on. The IP address may be assigned by any suitable element, such as a gateway general packet radio service (GPRS) support node (GGSN), for example. Alternatively, an IP source address may be assigned or designated in any other suitable manner. KUT 26 may now be implemented to retrieve the user ID name associated with the IP address correlating to end user 12. This information may be positioned in a billing record that may be used to create a bill for a given end user 12. This may also be used (for example) to track information such as how many bytes were uploaded by end user 12 or how many uniform resource locator (URL) addresses were accessed by a given end user 12.

CSG 14 and BMAs 22a-c may implement any suitable communications protocol in order to exchange information. In an example embodiment, GTP elements 30a-d may be used as a communications protocol or platform for such communications. Alternatively, CSG 14 and BMAs 22a-c may implement any communications protocol or tunneling communication link in order to provide for a suitable data exchange. GTP elements 30a-d may be included in CSG 14 or provided external thereto and be GTP or non-GTP based. GTP elements 30a-d are software communication protocols that describe the acknowledgement (or ACKing) and handshaking operations that may allow recognition of active, operational, and disabled states associated with BMAs 22a-c. In addition, GTP elements 30a-d may facilitate the formatting, header information, sequencing, and other communication parameters in order to effectively deliver data or information between CSG 14 and selected BMAs 22a-c. GTP elements 30a-d may also recognize which BMAs 22a-c are active by analyzing requests for example.

Once generated, a billing record may be sent to a selected BMA 22a-c and held there until an acknowledgment signal is returned. Thus, a queue may be provided for (or within) each BMA 22a-c to store this information. When a selected BMA 22a-c sends the acknowledgment signal, it may identify which queue to access in order to verify that a given billing record has been successfully received. In another embodiment, CSG 14 may determine which queue to evaluate based on BMA information, whereby BMAs 22a-c are not performing the identification. After successful reception, there is no longer a need to maintain the billing record. Where no acknowledgment signal is received for a given billing record after a designated time interval, the billing record may be retransmitted after obtaining information relating to which BMA 22a-c was to receive the billing record.

In one embodiment, an API may be provided to GTP elements 30a-d. Rather than specifying specific BMA destinations using IP and port designations on the API, a pointer may be implemented for the associated BMA structure. The pointer may include GTP information as well as IP and port information and be communicated to any suitable element within communication system 10. The pointer may be null in the case of no active BMAs 22a-c and generally referred to as the BMA handle. In other embodiments, selected BMAs 22a-c may implement a suitable GTP protocol.

GTP elements 30a-d may also maintain an aggregation buffer on a per-BMA basis to accumulate billing records (potentially for multiple end users 12). This may allow for the minimization of the overhead in transmitting each billing record. As each buffer is filled, it may then be transmitted to the IP address and port found in the BMA handle. In addition, the buffer may be added to the retransmit queue associated with or designated to that BMA handle. GTP elements 30a-d may additionally maintain a retransmit queue on a per-BMA basis. When an acknowledgment packet is received from a selected BMA 22a-c, the source may be determined by using an IP look-up operation in a BMA list. Once a BMA handle is found, GTP elements 30a-c may remove the sequence numbers contained in the acknowledgment signal from the proper retransmit queue. Where a BMA handle cannot be found, incoming packets may be dropped, discarded, or otherwise ignored.

GTP elements 30a-d may additionally maintain a dummy BMA descriptor in corresponding global data. This may be used to allow billing records to aggregate when there is not an active BMA to accommodate requests from loggen 24. When a request to send a billing record is received and the given BMA handle is null, GTP elements 30a-d may convert to using the dummy BMA and its buffers to accumulate the billing records. When the buffer and dummy BMA is full, the packet may then be added to the unsent packet queue. The unsent packet queue represents a mechanism used by GTP elements 30a-d to accumulate packets that have no destination (e.g., when there is no active BMA). Where the maximum allowable queued record count is reached, packets may be dropped rather than transferred to the unsent packet queue.

Control packets may not necessarily be aggregated in every embodiment. For example, control packets may be immediately transmitted and added to the retransmit queue of a given BMA handle. Replies to control packets may generally follow the same guidelines for data packets. Where the original request cannot be found, the reply may be discarded or otherwise ignored. Control packets may not be added to the dummy BMA descriptor queues or the unsent packets queue where appropriate and according to particular needs.

Selected GTP elements 30a-d may also build and maintain a list of packets eligible for retransmit in order to avoid the processing of packets that are not eligible for transmission. In one embodiment, GTP element 30a is delegated this responsibility. An eligible packet may be defined as one that has been waiting for an acknowledgment signal from a given BMA for more than a designated time interval (such as two seconds, for example). A selected GTP element 30a-d may use two queues and the pointer (as described above) that is directed to a current queue for retransmissions.

In operation, queue A may represent the current queue whereby a two-second timer is started. New data packets may then arrive and, upon transmit, be added to the current queue. When data packets are acknowledged, they may be removed from whichever retransmit queue they were placed. When a timer reaches its end or a queue is adequately filled, the current queue may be switched to the other queue, and now the current queue may be retransmitted. When the internal maximum retransmit count is reached, processing may cease. The timer may then be restarted after the processing operations are executed. Thus, the sequence may follow a pattern in which the current queue is designated as the A queue, whereby new packets are added to the A queue. Once the timer reaches its end, the B queue is now the current queue. Packets are retransmitted from the B queue and the timer restarts. The timer may then reach its end, whereby the A queue may now operate as the current queue. Packets may be retransmitted from the A queue and the timer restarted. These steps may then be restarted continuously in order to adequately process information in communication system 10.

Because GTP elements 30a-d are managing the retransmit queues and other BMA-specific information on a per-BMA basis, GTP elements 30a-d may be notified of when BMAs are created, deleted, activated, or removed. A selected BMA 22a-c may notify GTP elements 30a-d whenever a new BMA is introduced into the architecture. GTP elements 30a-d may then initialize all the requisite data structures. In the case where a selected BMA 22a-c notifies a GTP element 30a-d when a BMA is deleted from configuration, GTP elements 30a-d may clean up any dynamic storage associated with the BMA handle. In the case where a selected BMA 22a-c notifies GTP elements 30a-d when a BMA becomes active, GTP elements 30a-d may empty the unsent packets queue.

In the case where a selected BMA 22a-c goes from active to another state, KUT 26 may be directed to reassign all end users 12, and any packets that have not been acknowledged may be retransmitted or recarved. During redirect processing, selected BMAs 22a-c may notify GTP elements 30a-d to transmit accumulated data from one BMA to another BMA. This may be treated the same as a BMA failure where a new BMA will be taking one or more responsibilities of the disabled BMA. GTP elements 30a-d may communicate with KUT 26 in order to reassign KUT 26 to the new BMA and then reassign each packet to the new BMA retransmit queues.

A number of additional elements (included within or external to CSG 14) may be included within communication system 10 that recognize when a selected BMA 22a-c becomes disabled or inoperable. An idle BMA may become active and assume the role of a disabled BMA. Alternatively, the unassigned work may be evenly distributed to multiple BMAs 22a-c such that processing operations may continue as normal. The idle BMA may be in a standby mode that is designated by CSG 14, internally, or designed internally by any BMA 22a-c. Billing records may be properly redistributed in an even fashion to a set of healthy, active, or non-filled BMAs 22a-c. In one embodiment, the communications protocol implemented between CSG 14 and BMAs 22a-c, e.g., GTP elements 30a-d, may recognize the state associated with a given BMA.

In operation, when a BMA fails there may be entries in KUT 26 associated with that failing BMA that need to be updated. There may also exist unacknowledged packets in the GTP retransmit queue that have to be sent to another active BMA. When GTP elements 30a-d detect a failure, they may notify any selected BMAs 22a-c via an API that communicates to GTP elements 30a-d whether or not there is another standby BMA ready to assume one or more of the vacant responsibilities.

If there is a BMA that was made active by virtue of a failing communication to a selected BMA 22a-c, GTP elements 30a-d may notify KUT 26 (via an API) in order to reassign all KUT entries to a BMA that matches the failed BMA handle to a new handle. Now all new billing records from end user 12 on the failed BMA may be delivered to the newly activated BMA. In addition, all queued data packets for the failed BMA may be transferred to the retransmit queues of the new BMA. Where there is no standby BMA to take over for the failed one, GTP elements 30a-d may communicate a null signal on the API to KUT 26 to perform the reassign. The retransmit queue of the failed BMA may be scanned by the GTP element 30a-d. Each billing record may then be extracted from the aggregated packets. In addition, the IP addresses from the flow may be passed to KUT 26 on an API that will return the BMA associated with those addresses. The billing records may then be aggregated or sent to the BMA handle returned by KUT 26. Where KUT 26 returns a null signal (no active BMA available), then the billing records may be aggregated using a dummy BMA in a selected GTP element 30a-d.

Router 18 is a network element that operates to receive information from CSG 14. Router 18 is offered for purposes of example only and may be substituted with any suitable network element, device, or component where appropriate and according to particular needs. For example, router 18 may be substituted with a switch, a gateway, a web server, or any other suitable element that operates to receive data or information from CSG 14. Router 18 may direct a request generated by end user 12 to a corresponding network location within communication system 10. Alternatively, router 18 may be a terminal node operable to process some piece of information or data and return some result to end user 12 via CSG 14.

In operation of an example embodiment, a packet may be delivered to CSG 14. The first packet in the data flow may be associated with end user 12 and analyzed by CSG 14. Accompanying hardware or software in CSG 14 may collect some information or extract information from the data flow and communicate with software within CSG 14. The software may operate to save selected data and (depending on whether it is a hypertext tunneling protocol (HTTP) request or a non-HTTP request) suitably discard other information. In the case where the data flow does not include an HTTP request, CSG 14 may simply retain certain information about the data flow and potentially save that information until the flow ends.

Where an HTTP request is made, information may exist that is provided by a browser and additional information may be offered about the URL which may be used by CSG 14. In addition, information about which location in the network end user 12 is attempting to access may also be used by CSG 14. CSG 14 may perform a sniffing operation in this sense and glean information from packets included within a data flow. Other information to be extracted from HTTP requests or non-HTTP requests may include source and destination address information, how long the communication session lasted, how many bytes were sent or received by end user 12, or any other suitable parameters or properties associated with end user 12, the location to be accessed, or the data flow initiated by end user 12.

A billing record may then be created within CSG 14 and sent to a selected BMA 22a-c. A look-up operation may then be performed in order to correlate the IP address of end user 12 in KUT 26 to the user ID that may be included in that billing record. With this information provided, a selected BMA may now be assigned for this end user (if end user 12 is a new user). If this information or data flow is associated with an existing end user 12, it may be determined which BMA 22a-c end user 12 was previously utilizing. Accordingly, the selected BMA 22a-c that was being used may be reassigned or selected, whereby one or more billing records are sent to that selected BMA 22a-c.

FIGURE 2 is a simplified block diagram of KUT 26 included within communication system 10 in accordance with one embodiment of the present invention. KUT 26 may operate to manage the association of the user ID with a chosen BMA 22a-c. KUT 26 may also be used to correlate user ID information with IP address data from a given communication or data flow. A number of entries may be included within KUT 26 that execute this correlation. For example, an entry may be provided as '1.1.1.1' with a data field in a first segment that defines a selected BMA 22a-c and a data field segment in a second segment that identifies a user ID for that IP address as some person or entity. This is illustrated by the entry in FIGURE 2.

KUT 26 is thus provided with the capability of mapping the source IP address (or any other end user 12 parameter) to a user ID. The user ID may be obtained from an external database where appropriate or any other suitable location. Alternatively, the user ID may be extracted from a RADIUS flow, a terminal access controller access control system (TACACS) communications flow, a diameter communications flow, or any other suitable communications protocol flow or session. The database may be populated at any suitable time and updated using any suitable mechanism, such as via sniffing of RADIUS or TACACS flows. Thus, with the proper pairing or correlation, the user ID may be positioned in the billing records that are created by CSG 14.

In the example provided in FIGURE 2, the source address is given by '1.1.1.1' assigned to John Smith. John Smith is now put into the billing record with the source IP address and communicated to a selected BMA 22a-c. Now, an association may be made between an end user 12 (John Smith) with this billing record for subsequent data flows. The user ID correlation to a selected BMA 22a-c may be performed in KUT 26. KUT 26 may maintain user ID information for a given IP address and also include which BMA has been selected. The first time a look up operation is executed for a given end user 12, the BMA token or address may be '0' or an indication may be provided that one has yet to be assigned. When querying KUT 26 for a given end user 12, a load balancing decision may be executed and a selected BMA 22a-c chosen. An algorithm that is included within CSG 14 may be implemented at this point using any suitable processing protocol, such as a round-robin processing operation for example. KUT 26 may execute this operation and include such an algorithm or alternatively KUT 26 may communicate with any other element that performs this operation.

FIGURE 3 is a simplified flowchart illustrating a series of example steps for processing information in a data flow. The method begins at step 100, where end user 12 communicates a data flow to CSG 14. At step 102, CSG 14 may invoke one or more elements included therein in order to initiate the generation of a billing record. At step 104, KUT 26 may be invoked in order to determine a user ID associated with the IP address provided by the data flow. Sniffing of a data flow may be effectuated by any suitable mechanism and achieved by gleaning information from RADIUS or TACACS flows for example. At step 106, KUT 26 may cooperate with loggen 24 in order to format and communicate a billing record to a selected BMA 22a-c.

At step 108, GTP elements 30a-d may be invoked in order to communicate billing records between CSG 14 and BMAs 22a-c. Once the selected BMA 22a-c has received the billing record, at step 110 the designated BMA 22a-c may generate a bill for a corresponding end user 12 that initiated the data flow. Alternatively, such information may be used for data mining, accounting, or any suitable application in accordance with particular needs. Other applications may include authentication, authorization, or quality of service operations.

Some of the steps illustrated in FIGURE 3 may be changed or deleted where appropriate and additional steps may also be added to the flowchart. These changes may be based on specific communications architectures or particular networking arrangements or configurations and do not depart from the scope or the teachings of the present invention. In addition, these steps may be automated or combined where appropriate as a result of software or hardware that is implemented in CSG 14 or BMAs 22a-c.

Although the present invention has been described in detail with reference to particular embodiments, it should be understood that various other changes, substitutions, and alterations may be made hereto without departing from the spirit and scope of the present invention. For example, although the present invention has been described with reference to a number of elements included within CSG 14 or BMAs 22a-22c, these elements may be rearranged or positioned anywhere within communication system 10. In addition, these elements may be provided as separate external components to communication system 10 where appropriate. The present invention contemplates great flexibility in the arrangement of these elements, as well as their internal components. For example, in an alternative embodiment CSG 14 may include multiple BMAs 22a-22c in a single module.

In addition, although FIGURES 1 and 2 illustrate an arrangement of selected elements, such as end user 12, router 18, and CSG 14, numerous other components may be used in combination with these elements or substituted for these elements without departing from the teachings of the present invention. For example, CSG 14 may be positioned in any suitable point of a data flow such that it may extract information used for generating a billing record. Moreover, the use of end user 12 and router 18 has only been offered for purposes of example in a network environment. CSG 14 also has numerous other applications and may be positioned in any architecture seeking to glean some data or information included within a data flow and correlate the data flow to an entity or end user 12. GTP elements 30a-d may also be replaced with any other suitable element operable to facilitate communications between CSG 14 and BMAs 22a-c. Numerous other changes, substitutions, variations, alterations, and modifications may be ascertained by those skilled in the art and it is intended that the present invention encompass all such changes, substitutions, variations, alterations, and modifications as falling within the spirit and scope of the appended claims. Moreover, the present invention is not intended to be limited in any way by any statement in the specification that is not otherwise reflected in the appended claims.

## Claims

1. An apparatus for processing information in a data flow, comprising:
a client service gateway (14) operable to receive a plurality of data flows from a plurality of end users and extract a plurality of portions of information from the plurality of data flows respectively, the client service gateway (14) operable to generate a plurality of respective billing records based on the respective plurality of portions of the plurality of data flows, wherein the respective portions of information includes data associated with the plurality of respective end users (12), and wherein the client service gateway (14) is further operable to distribute the plurality of billing records evenly amongst multiple billing mediation agents (22) coupled to the client service gateway (14), wherein if a billing mediation agent (22) becomes non-operational or dysfunctional, the billing records which would have been distributed to the non-operational or dysfunctional billing mediation agent (22) are redistributed amongst other active or operational billing mediation agents (22), and wherein the plurality of billing records enable the respective billing mediation agents (22) to generate respective results reflecting one or more parameters associated with the respective end users.

2. The apparatus of Claim 1, further comprising:
a known user table, KUT, (26) operable to store a internet protocol, IP, addresses associated with the respective end users (12), the KUT (26) being further operable to store assignments of the respective end users (12) to respective billing mediation agents (22).

3. The apparatus of Claim 2, wherein the client service gateway (14) is further operable to direct all information relating to the respective end users (12) to the respective billing mediation agents based on the assignments stored in the KUT (26).

4. The apparatus of Claim 1, wherein the client service gateway (14) includes one or more algorithms operable to direct the plurality of respective billing records to the respective billing mediation agents (22) .

5. The apparatus of Claim 1, further comprising:
one or more general packet radio system, GPRS, tunneling protocol, GTP, based communications protocol elements (30) included within each of the client service gateway (14) and plurality of billing mediation agents (22) and operable to facilitate communications between the client service gateway (14) and the plurality of billing mediation agents (22), wherein one or more of the GTP elements (30) allow the client service gateway (14) to recognize when the multiple billing mediation agents (22) are either active or dysfunctional.

6. The apparatus of Claim 1, further comprising:
a loggen element (24) included within the client service gateway (14) and operable to generate the respective billing records based on the respective portions of information, the respective billing records being communicated to the respective billing mediation agents(22).

7. The apparatus of Claim 1, further comprising:
one or more algorithms included within the client service gateway (14) and operable to identify additional billing mediation agents (22) that are operable to receive additional data flows, the identification being based on workflow activity associated with each of the additional billing mediation agents (22).

8. A method for processing information in a data flow, comprising:
receiving a plurality of data flows from a plurality of end users; extracting a plurality of portions of information from the plurality of data flows respectively;
generating (102) a plurality of respective billing records based on the respective plurality of portions of information, wherein the respective portions of information include data associated the plurality of respective end users;
distributing (108) the plurality of billing records evenly amongst multiple billing mediation agents;
determining whether a billing mediation agent becomes non-operational or dysfunctional;
if a billing mediation agent has been determined as non-operational or dysfunctional, redistributing amongst other active or operational billing mediation agent the billing records which would have been distributed to the non-operational or dysfunctional billing mediation agent; and
receiving the plurality of respective billing records at respective billing mediation agents, the plurality of respective billing records being used to generate respective results that reflect one or more parameters associated with the respective end users.

9. The method of Claim 8, further comprising:
directing the plurality of respective billing records to the respective billing mediation agents using one or more algorithms.

10. The method of Claim 8, further comprising:
storing internet protocol (IP) addresses associated with respective end users; and
maintaining assignments of the respective end users to the respective billing mediation agents.

11. The method of Claim 10, further comprising:
directing information relating to the respective end users to the respective billing mediation agents based on the assignments.

12. The method of Claim 8, further comprising:
communicating using one or more GTP elements included within each of a client service gateway and the multiple billing mediation agents; and
recognizing when the multiple billing mediation agents are either active or dysfunctional.

13. The method of Claim 8, further comprising:
generating the respective billing records based on the respective portions of information, the respective billing records being communicated to the respective billing mediation agents.

14. The method of Claim 8, further comprising:
identifying additional billing mediation agents that are to receive additional data flows based on workflow activity associated with each of the additional billing mediation agents.

15. A computer readable medium including executable instructions which, when executed in a processing system, cause the processing system to perform a method according to any one of claims 8 to 14.

## Patentansprüche

1. Vorrichtung zum Verarbeiten von Information in einem Datenstrom, aufweisend:
einen Clientdienstgateway (14), der zum Empfangen von mehreren Datenströmen von mehreren Endbenutzern und zum jeweiligen Extrahieren von mehreren Informationsanteilen aus den mehreren Datenströmen betriebsfähig ist, wobei der Clientdienstgateway (14) zum Erstellen von mehreren jeweiligen Abrechnungsdatensätzen auf Grundlage der jeweiligen mehreren Anteile der mehreren Datenströme betriebsfähig ist, wobei die jeweiligen Informationsanteile Daten enthalten, die den mehreren Endbenutzern (12) zugeordnet sind, und wobei der Clientdienstgateway (14) ferner zum gleichmäßigen Verteilen der mehreren Abrechnungsdatensätze unter mehrfachen Abrechnungsvermittlungsagenten (22), die mit dem Clientdienstgateway (14) verbunden sind, betriebsfähig ist, wobei, wenn ein Abrechnungsvermittlungsagent (22) betriebsunfähig oder dysfunktional wird, die Abrechnungsdatensätze, welche zum betriebsunfähigen oder dysfunktionalen Abrechnungsvermittlungsagenten (22) verteilt worden wären, unter anderen aktiven oder betriebsfähigen Abrechnungsvermittlungsagenten (22) neuverteilt werden, und wobei es die mehreren Abrechnungsdatensätze den jeweiligen Abrechnungsvermittlungsagenten (22) ermöglichen, jeweilige Ergebnisse zu erstellen, die einen oder mehr Parameter wiedergeben, die den jeweiligen Endbenutzern zugeordnet sind.

2. Vorrichtung nach Anspruch 1, ferner aufweisend:
eine Tabelle bekannter Benutzer, KUT, (26), die zum Speichern von Internetprotokoll-, IP-, Adressen betriebsfähig ist, welche den jeweiligen Endbenutzern (12) zugeordnet sind, wobei die KUT (26) ferner zum Speichern von Zuweisungen der jeweiligen Endbenutzer (12) zu jeweiligen Abrechnungsvermittlungsagenten (22) betriebsfähig ist.

3. Vorrichtung nach Anspruch 2, wobei der Clientdienstgateway (14) ferner zum Leiten aller Information bezüglich der jeweiligen Endbenutzer (12) zu den jeweiligen Abrechnungsvermittlungsagenten auf Grundlage der Zuweisungen, die in der KUT (26) gespeichert sind, betriebsfähig ist.

4. Vorrichtung nach Anspruch 1, wobei der Clientdienstgateway (14) einen oder mehr Algorithmen enthält, die zum Leiten der mehreren jeweiligen Abrechnungsdatensätze zu den jeweiligen Abrechnungsvermittlungsagenten (22) betriebsfähig sind.

5. Vorrichtung nach Anspruch 1, ferner aufweisend:
ein oder mehr auf General Packet Radio System-, GPRS-, Tunnelprotokoll-, GTP-, basierende Kommunikationsprotokollelemente (30), die in jedem des Clientdienstgateway (14) und der mehreren Abrechnungsvermittlungsagenten (22) beinhaltet sind und zum Ermöglichen von Kommunikation zwischen dem Clientdienstgateway (14) und den mehreren Abrechnungsvermittlungsagenten (22) betriebsfähig sind, wobei ein oder mehr GTP-Elemente (30) es dem Clientdienstgateway (14) ermöglichen zu erkennen, wenn die mehrfachen Abrechnungsvermittlungsagenten (22) entweder aktiv oder dysfunktional sind.

6. Vorrichtung nach Anspruch 1, ferner aufweisend:
ein Loggenelement (24), das innerhalb des Clientdienstgateways (14) beinhaltet ist und zum Erstellen der jeweiligen Abrechnungsdatensätze auf Grundlage der jeweiligen Informationsanteile betriebsfähig ist, wobei die jeweiligen Abrechnungsdatensätze den jeweiligen Abrechnungsvermittlungsagenten (22) übermittelt werden.

7. Vorrichtung nach Anspruch 1, ferner aufweisend:
einen oder mehr Algorithmen, die innerhalb des Clientdienstgateways (14) beinhaltet sind und zum Identifizieren von zusätzlichen Abrechnungsvermittlungsagenten (22) betriebsfähig sind, welche zum Empfangen von zusätzlichen Datenströmen betriebsfähig sind, wobei die Identifizierung auf Arbeitsflussaktivität basiert, die jedem der zusätzlichen Abrechnungsvermittlungsagenten (22) zugeordnet ist.

8. Verfahren zum Verarbeiten von Information in einem Datenstrom, aufweisend:
Empfangen von mehreren Datenströmen von mehreren Endbenutzern;
jeweiliges Extrahieren von mehreren Informationsanteilen aus den mehreren Datenströmen;
Erstellen (102) von mehreren jeweiligen Abrechnungsdatensätzen auf Grundlage der jeweiligen mehreren Informationsanteile, wobei die jeweiligen Informationsanteile Daten enthalten, die den mehreren jeweiligen Endbenutzern zugeordnet sind;
gleichmäßiges Verteilen (108) der mehreren Abrechnungsdatensätze unter mehrfachen Abrechnungsvermittlungsagenten;
Bestimmen, ob ein Abrechnungsvermittlungsagent betriebsunfähig oder dysfunktional wird;
wenn ein Abrechnungsvermittlungsagent als betriebsunfähig oder dysfunktional bestimmt wurde, Neuverteilen unter anderen aktiven oder betriebsfähigen Abrechnungsvermittlungsagenten der Abrechnungsdatensätze, die zum betriebsunfähigen oder dysfunktionalen Abrechnungsvermittlungsagenten verteilt worden wären; und
Empfangen der mehreren jeweiligen Abrechnungsdatensätze an jeweiligen Abrechnungsvermittlungsagenten, wobei die mehreren jeweiligen Abrechnungsdatensätze dazu benutzt werden, jeweilige Ergebnisse zu erstellen, die einen oder mehr Parameter wiedergeben, welche den jeweiligen Endbenutzern zugeordnet sind.

9. Verfahren nach Anspruch 8, ferner aufweisend:
Leiten der mehreren Abrechnungsdatensätze zu den jeweiligen Abrechnungsvermittlungsagenten unter Benutzung des einen oder mehr Algorithmen.

10. Verfahren nach Anspruch 8, ferner aufweisend:
Speichern von Internetprotokoll- (IP-) Adressen, die jeweiligen Endbenutzern zugeordnet sind; und
Unterhalten von Zuweisungen der jeweiligen Endbenutzer zu den jeweiligen Abrechnungsvermittlungsagenten.

11. Verfahren nach Anspruch 10, ferner aufweisend:
Leiten von Information, die die jeweiligen Endbenutzer betrifft, zu den jeweiligen Abrechnungsvermittlungsagenten auf Grundlage der Zuweisungen.

12. Verfahren nach Anspruch 8, ferner aufweisend:
Übermitteln unter Benutzung von einem oder mehr GTP-Elementen, die innerhalb von jedem eines Clientdienstgateways und der mehrfachen Abrechnungsvermittlungsagenten beinhaltet sind; und
Erkennen, wenn die mehrfachen Abrechnungsvermittlungsagenten entweder aktiv oder dysfunktional sind.

13. Verfahren nach Anspruch 8, ferner aufweisend:
Erstellen der jeweiligen Abrechnungsdatensätze auf Grundlage der jeweiligen Informationsanteile, wobei die jeweiligen Abrechnungsdatensätze den jeweiligen Abrechnungsvermittlungsagenten übermittelt werden.

14. Verfahren nach Anspruch 8, ferner aufweisend:
Identifizieren von zusätzlichen Abrechnungsvermittlungsagenten, die zusätzliche Datenströme auf Grundlage einer Arbeitsflussaktivität empfangen sollen, welche jedem der zusätzlichen Abrechnungsvermittlungsagenten zugeordnet ist.

15. Maschinenlesbares Medium mit ausführbaren Anweisungen, die, wenn sie in einem Verarbeitungssystem ausgeführt werden, bewirken, dass das Verarbeitungssystem ein Verfahren gemäß einem der Ansprüche 8 bis 14 ausführt.

## Revendications

1. Appareil de traitement d'informations dans un flux de données, comprenant :
une passerelle de service client (14) utilisable pour recevoir plusieurs flux de données depuis plusieurs utilisateurs finaux, et
l'extraction de plusieurs portions d'informations de la pluralité de flux de données respectivement, la passerelle de service client (14) étant utilisable pour générer plusieurs enregistrements de facturation respectifs basés sur les plusieurs portions d'informations respectives parmi la pluralité de flux de données,
où les portions respectives d'informations incluent des données associées à la pluralité d'utilisateurs finaux respectifs (12), et où la passerelle de service client (14) est en outre utilisable pour distribuer la pluralité d'enregistrements de facturation de façon régulière parmi plusieurs agents de médiation de facturation (22) couplés à la passerelle de service client (14), où si un agent de médiation de facturation (22) devient non-opérationnel ou dysfonctionnel, les enregistrements de facturation qui auraient été distribués à l'agent de médiation de facturation (22) non-opérationnel ou dysfonctionnel seront redistribués parmi d'autres agents de médiation (22) de facturation actifs ou opérationnels pour générer des résultats respectifs reflétant au moins un paramètre associé aux utilisateurs finaux respectifs.

2. Appareil selon la revendication 1, comprenant en outre :
une table d'utilisateurs connus (KUT)(26) utilisable pour enregistrer des adresses d'un protocole internet (IP) associées aux utilisateurs finaux respectifs (12), la KUT (26) étant en outre utilisable pour enregistrer des affectations des utilisateurs finaux respectifs (12) aux agents de médiation de facturation respectifs (22).

3. Appareil selon la revendication 2, dans lequel la passerelle de service client (14) est en outre utilisable pour diriger toutes les informations concernant des utilisateurs finaux respectifs (12) aux agents de médiation de facturation respectifs en fonction des affectations enregistrées dans la KUT (26).

4. Appareil selon la revendication 1, dans lequel la passerelle de service client (14) inclut au moins un algorithme utilisable pour diriger la pluralité d'enregistrements de facturation vers les agents de médiation de facturation respectifs (22).

5. Appareil selon la revendication 1, comprenant en outre au moins un élément de protocole de communication (30) fondé sur le *general packet radio system* (GPRS) inclus dans chacune des passerelles de service client (14) et pluralités d'agents de médiation de facturation (22) et utilisable pour faciliter les communications entre la passerelle de service client (14) et la pluralité d'agents de médiation de facturation (22), où au moins un des éléments GTP (30) permet à la passerelle de service client (14) de reconnaître quand les plusieurs agents de médiation de facturation (22) sont soit actifs, soit dysfonctionnels.

6. Appareil selon la revendication 1, comprenant en outre un élément de connexion (24) inclus dans la passerelle de service client (14) et utilisable pour générer les enregistrements de facturation respectifs en fonction des portions d'informations respectives, les enregistrements de facturation respectifs étant communiqués aux agents de médiation de facturation (22) respectifs.

7. Appareil selon la revendication 1, comprenant en outre au moins un algorithme inclus dans la passerelle de service client (14) et utilisable pour identifier des agents de médiation de facturation (22) supplémentaires qu'on peut utiliser pour recevoir des flux de données supplémentaires, l'identification étant basée sur l'activité de flux de travail associée à chacun des agents de médiation de facturation (22) supplémentaires.

8. Procédé de traitement d'informations dans un flux de données, comprenant :
la réception de plusieurs flux de données depuis plusieurs utilisateurs finaux ;
l'extraction de plusieurs portions d'informations de la pluralité de flux de données, respectivement ;
la génération (102) d'une pluralité d'enregistrements de facturation respectifs basés sur les plusieurs portions d'informations respectives, où les portions d'informations respectives incluent des données associées à la pluralité d'utilisateurs finaux respectifs ;
la distribution (108) de la pluralité d'enregistrements de facturation de façon régulière parmi plusieurs agents de médiation de facturation ;
déterminer si un agent de médiation de facturation devient non-opérationnel ou dysfonctionnel ;
si un agent de médiation de facturation a été déterminé comme non-opérationnel ou dysfonctionnel, la redistribution parmi les autres agents de médiation de facturation actifs ou opérationnels des enregistrements de facturation qui auraient été distribués à l'agent de médiation de facturation (22) non-opérationnel ou dysfonctionnel ; et
la réception de la pluralité d'enregistrements de facturation au niveau des agents de médiation de facturation respectifs, la pluralité d'enregistrements de facturation servant à générer des résultats respectifs qui reflètent au moins un paramètre associé aux utilisateurs finaux respectifs.

9. Procédé selon la revendication 8, comprenant en outre de diriger la pluralité d'enregistrements de facturation respectifs aux agents de médiation de facturation respectifs en utilisant au moins un algorithme.

10. Procédé selon la revendication 8, comprenant en outre d'enregistrer des adresses d'un protocole internet (IP) associées aux utilisateurs finaux respectifs ; et
de maintenir les affectations des utilisateurs finaux respectifs aux agents de médiation de facturation respectifs.

11. Procédé selon la revendication 10, comprenant en outre de diriger des informations concernant les utilisateurs finaux respectifs vers les agents de médiation de facturation respectifs en fonction des affectations.

12. Procédé selon la revendication 8, comprenant en outre :
de communiquer au moins un élément GTP inclus dans chacune des uniques passerelles de service client et multiples agents de médiation de facturation ; et
de reconnaître quand les multiples agents de médiation de facturation sont soit actifs, soit dysfonctionnels.

13. Procédé selon la revendication 8, comprenant en outre de générer les enregistrements de facturation respectifs en fonction des portions respectives d'informations, les enregistrements de facturation respectifs étant communiqués aux agents de médiation de facturation respectifs.

14. Procédé selon la revendication 8, comprenant en outre d'identifier des agents de médiation de facturation supplémentaires destinés à recevoir des flux de données supplémentaires sur l'activité de flux de travail associée à chacun des agents de médiation de facturation supplémentaires.

15. Support lisible par un ordinateur, incluant des instructions exécutables qui, quand elles sont exécutées dans un système d'exploitation, amènent le système d'exploitation à effectuer un procédé selon l'une quelconque des revendications 8 à 14.
